Europäisches Patentamt

European Patent Office

Office européen des brevets

(19)

(11) Veröffentlichungsnummer: **0 192 037**
**B1**

(12) **EUROPÄISCHE PATENTSCHRIFT**

(45) Veröffentlichungstag der Patentschrift:
**10.01.90**

(51) Int. Cl.⁴: **F 16 K 3/24, F 16 N 17/02**

(21) Anmeldenummer: **86100443.0**

(22) Anmeldetag: **15.01.86**

(54) **Absperrvorrichtung, insbesondere für unter hohem Druck stehende Flüssigkeiten und Verwendung der Vorrichtung.**

(30) Priorität: **21.02.85 CH 801/85**

(43) Veröffentlichungstag der Anmeldung:
**27.08.86 Patentblatt 86/35**

(45) Bekanntmachung des Hinweises auf die Patenterteilung:
**10.01.90 Patentblatt 90/2**

(84) Benannte Vertragsstaaten:
**BE CH DE FR GB IT LI SE**

(56) Entgegenhaltungen:
**EP-A- 0 149 078**
**DE-A- 2 620 582**
**FR-A- 1 538 574**
**US-A- 3 338 480**
**US-A- 3 993 165**

(73) Patentinhaber: **LONZA AG, Gampel/Wallis (CH)**

(72) Erfinder: **Furrer, Hansjörg, Lupsingerstrasse 15,
CH-4417 Ziefen (CH)**

(74) Vertreter: **Keller, René, Dr. et al, Patentanwälte Hartmut
Keller, Dr. René Keller Postfach 12, CH-3000 Bern 7 (CH)**

Beschreibung

Die Erfindung betrifft eine Absperrvorrichtung gemäss dem Oberbegriff des Patentanspruchs 1 und eine Verwendung der Vorrichtung gemäss dem Oberbegriff des Patentanspruchs 8.

Die Absperrvorrichtung ist insbesondere zum Absperren und Freigeben von unter hohem Druck stehenden Flüssigkeiten, z.B. Hochtemperaturschmiermitteln bestimmt. Solche Schmiermittel werden beispielsweise bei der Rohrherstellung auf die Dornstange gesprüht. Dabei steht das Schmiermittel unter einem Druck von bis zu 250 bar, und seine Strömungsgeschwindigkeit beträgt bis zu 120 m/sec. Die Dornstange wird mit einer Geschwindigkeit von einigen m/sec an der Sprühdüse vorbeigeführt und das Schmiermittel muss jeweils genau im Zeitpunkt, in dem die Dornspitze die Sprühstelle erreicht und in dem das Dornende diese wieder verlässt, freigegeben und wieder abgesperrt werden. Eine ungewollte Freigabe des Schmiermittels führt nicht nur zu Schmiermittelverlusten sondern ist lebensgefährlich für die Bedienungsperson. Hat diese, wenn kein Dorn an der Düse vorbeigeschoben wird, Arbeiten im Sprühbereich auszuführen, kann eine ungewollte Freigabe des Hochdruckstrahls zu lebensgefährlichen Verletzungen führen.

Eine Absperrvorrichtung der eingangs genannten Art ist in der DE-A-2 620 582 beschrieben. Die daraus bekannte Absperrvorrichtung dient zum Absperren und Freigeben eines Schmiermittels für eine Kolbenmaschine, z.B. einen Schiffsmotor. Das Verschlussorgan hat zwei, durch eine Verbindungsstange miteinander verbundende, dichtend an der Wandung des zylindrischen Hohlraums des Gehäuses anliegende Kolben. Die beiderseits an den Verschiebeweg der beiden Kolben angrenzenden Teilräume stehen mit einer mit Öl gefüllten Wellenkammer in Verbindung, damit im wesentlichen der gleiche hydraulische Druck auf die beiden Kolben wirkt. Wird einer der Kolben undicht, so gelangt Leckflüssigkeit (Schmiermittel) in die beiderseits an den Verschiebeweg angrenzenden Teilräume und von dort in die Wellenkammer. Die Undichtigkeit ist dabei nicht feststellbar. Sie kann nur im Zuge von Servicearbeiten bei einer vollständigen Demontage der Vorrichtung oder dann erkannt werden, wenn sie ein zu Betriebsstörungen führendes Ausmass annimmt.

Das Problem des Auftretens einer Undichtigkeit stellt sich namentlich bei abrasiven Flüssigkeiten und ist — an sich überraschend — bei Hochtemperaturschmiermitteln (vgl. das weiter unten zu den Schmiermitteln gemäss den schweiz. Patentschriften 596 294 und 609 728 Ausgeführte) für das Schmieren von Dornstangen besonders kritisch.

Hier will die Erfindung Abhilfe schaffen. Ihr liegt die Aufgabe zugrunde, eine auch bei abrasiven Flüssigkeiten zuverlässig arbeitende Absperrvorrichtung zu schaffen, die sehr kurze Schliess- und Öffnungszeiten (von wenigen Millisekunden) ermöglicht, ohne dass Leckage den Betrieb stört.

Die erfindungsgemässe Lösung dieser Aufgabe ist Gegenstand des Anspruchs 1. Bevorzugte Ausführungsarten und die erfindungsgemässe Verwendung sind Gegenstand der Ansprüche 2-8.

Die Vorteile der Erfindung sind namentlich darin zu sehen, dass eine Undichtigkeit rechtzeitig erkannt wird und nicht zu einer plötzlichen Funktionsunfähigkeit der Vorrichtung führt, und dass Leckflüssigkeit die Funktion der Betätigungseinrichtung nicht beeinträchtigen kann.

Im folgenden wird anhand der Zeichnung ein Ausführungsbeispiel der Erfindung näher beschrieben. Es zeigen:

Fig. 1 eine aufgeschnittene, perspektivische Darstellung einer Absperrvorrichtung in der Offenstellung,

Fig. 2 eine Fig. 1 entsprechende Darstellung der Vorrichtung in der Schliessstellung,

Fig. 3 einen Achsenlängsschnitt durch die Vorrichtung in der Offenstellung gemäss Fig. 1,

Fig. 4 einen Achsenlängsschnitt durch die Vorrichtung in der Schliessstellung gemäss Fig. 2, und

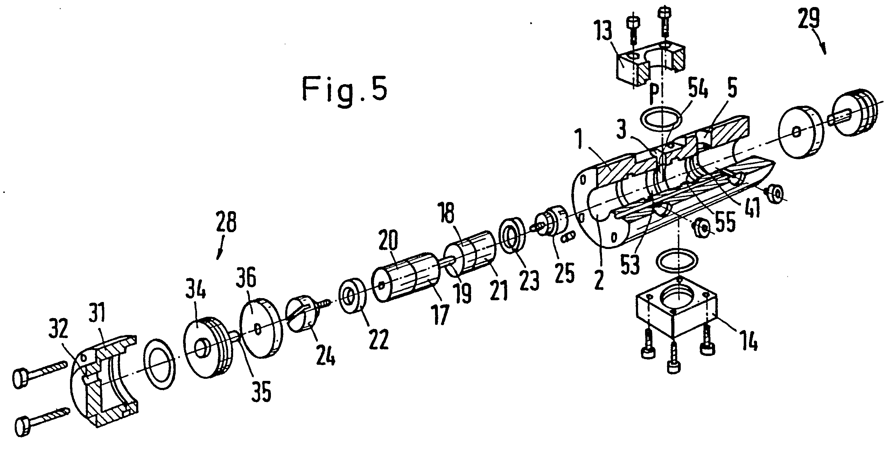

Fig. 5 eine aufgegliederte Darstellung der zusammenzubauenden Einzelteile der Vorrichtung.

Die Absperrvorrichtung hat ein hohlzylindrisches Gehäuse 1, in dessen durch das ganze Gehäuse hindurch verlaufenden, zylindrischen Hohlraum 2 ein Einlasskanal 3, ein Auslasskanal 4 und ein Entlastungskanal 5 münden. Der Einlass- und der Entlastungskanal 3 und 5 sind im in der Zeichnung oberen Teil des Gehäuses 1 in einem Abstand nebeneinander angeordnet, der Auslasskanal 4 ist im unteren Teil des Gehäuses 1 angeordnet und mündet zwischen dem Einlass- und Entlastungskanal 3 und 5 in den Hohlraum 2. Mit einem Innengewinde versehene Anschlussstücke 13 und 14 dienen zum Anschliessen von Rohrleitungen an die Kanäle 3 und 4. Zum gleichen Zweck hat der Entlastungskanal 5 ein Innengewinde. Das Verschlussorgan besteht aus einem Kolbenpaar, dessen beide Kolben 17, 18 durch eine Verbindungsstange 19 miteinander verbunden sind. Die Umfangsflächen der aus rostfreiem Stahl bestehenden Kolben 17, 18 sind geschliffene Dichtflächen, die dichtend am den Hohlraum 2 begrenzenden Zylindermantel 12 des Gehäuses 1 gleiten. (Die Dichtflächen könnten auch durch Kolbenringe gebildet sein.) An den der Verbindungsstange 19 abgewandten Seiten der Kolben 17 und 18 schliesst je ein einstückig mit den Kolben 17, 18 gebildeter Kolbenfortsatz 20, 21 an, dessen Durchmesser einige Zehntel Millimeter kleiner ist als der Durchmesser der Dichtflächen der Kolben 17, 18, so dass die Kolbenfortsätze 20, 21 nicht dichten sondern mit Spiel am Zylindermantel 12 liegen. Auf die freien Enden der Kolbenfortsätze 20, 21 ist je ein mit Dichtlippen versehener Ring 22, 23 mittels einer Schraube 24, 25 geschraubt. Durch die Dichtlippen der Ringe 22, 23 und die Dichtflächen der Kolben 17, 18 sind die Ringräume zwischen den Kolbenfortsätzen 20, 21 und dem Zylindermantel 12 an beiden Seiten dicht abgeschlossen.

Für die Verschiebung des Kolbenpaars 17, 18 zwischen der Offen- und der Schliessstellung sind an beiden Stirnseiten des Gehäuses 1 zwei einfach wirkende Kolben-Zylindereinheiten 28, 29 angeordnet. Der Zylinder 31 der Einheit 28 ist an die in der Zeichnung linke Stirnseite des Gehäuses 1 angeschraubt und hat einen Einlass 32 für ein Druckmittel (Luft) und einen Kanal 33 für die Ent- bzw. Belüftung des nicht vom Druckmittel beaufschlagten Raums. Die vom Druck beaufschlagte Arbeitsfläche des Kolbens 34 der Einheit 28 ist etwa vier mal so gross wie die Querschnittsfläche des Kolbens 17, 18. Der Kolben 34 trägt einen Zapfen 35, der durch eine zwischen dem Zylinder 31 und der Gehäusestirnseite festgeklemmte Scheibe 36 hindurch axial in den zylindrischen Hohlraum 2 hineinragt. Das freie Ende des Zapfens 35 drückt, wenn die Kolben-Zylindereinheit beaufschlagt ist, auf den Kopf der Schraube 24, mit welcher der Dichtungsring 22 an den Kolbenfortsatz 20 geschraubt ist. Die Kolben-Zylindereinheit 29 ist gleich aufgebaut wie die Kolben-Zylindereinheit 28.

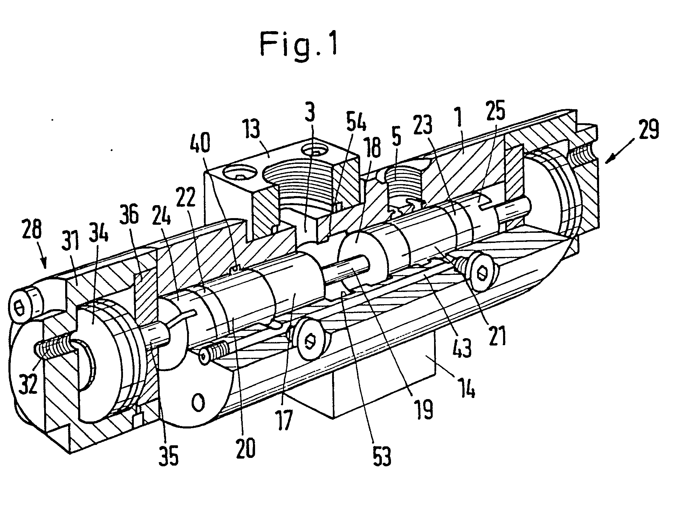

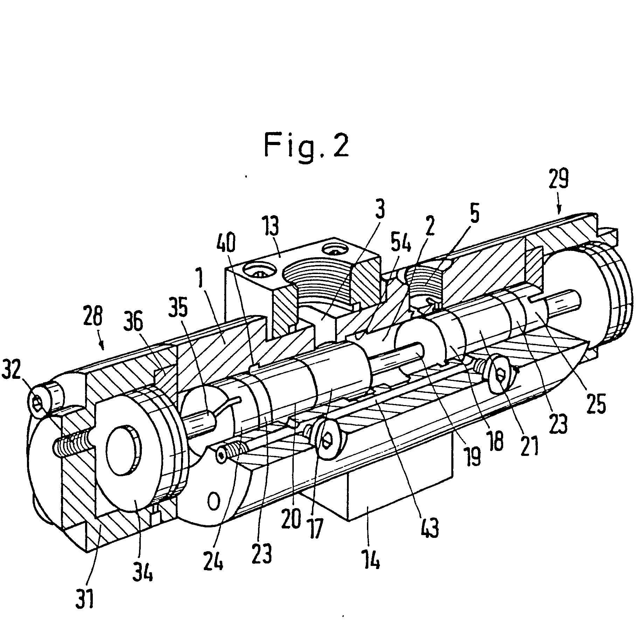

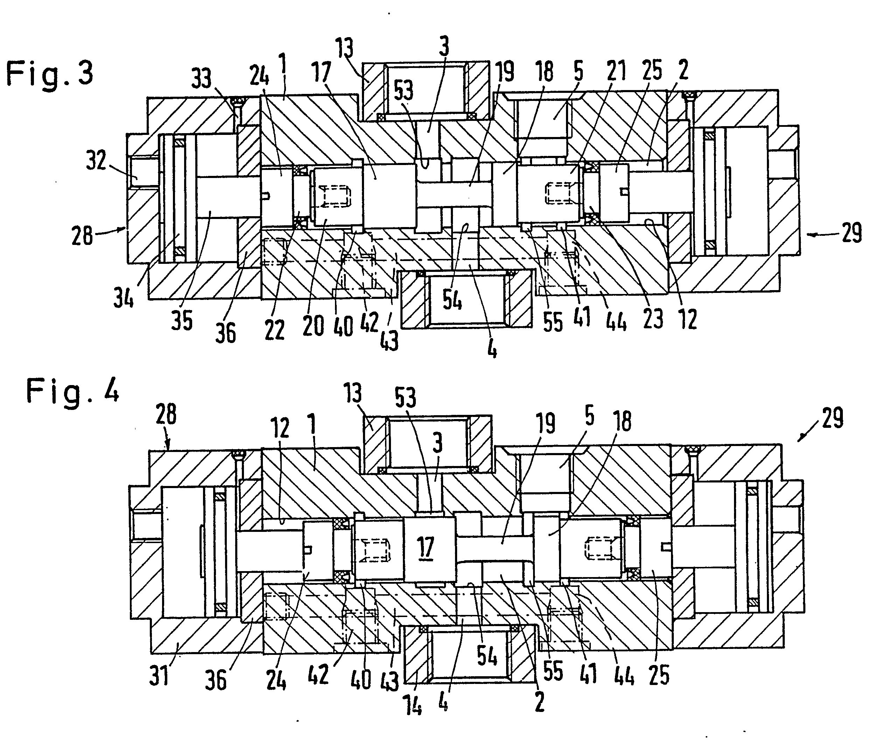

Für den Fall einer Undichtigkeit zwischen den Dichtflächen des Kolbenpaars 17, 18 und dem Zylindermantel 12 stehen die beiden an den Verschiebeweg des Kolbenpaars 17, 18 angrenzenden Teilräume des zylindrischen Hohlraums 2 mit dem Entlastungskanal 5 in Verbindung. Dazu sind in den beiden, die Teilräume begrenzenden Abschnitten des Zylindermantels 12 zwei Ringnuten 40, 41 vorgesehen, die miteinander und mit dem Entlastungskanal 5 kommunizieren. Die beiden Ringnuten 40, 41 grenzen unmittelbar an den Verschiebeweg des Kolbenpaars 17, 18 an. Das heisst, die Ringnut 40 grenzt in der Offenstellung des Kolbenpaars 17, 18 (Fig. 1 und 3) an den dem Kolben 18 abgewandten Umfangsrand der Dichtfläche des Kolbens 17 an, und die Ringnut 41 grenzt in der Schliessstellung (Fig. 2 und 4) des Kolbenpaares 17, 18 an den dem Kolben 17 abgewandten Umfangsrand der Dichtfläche des Kolbens 18 an. Der Abstand der beiden Ringnuten 40, 41 ist also um den Hub des Kolbenpaars 17, 18 grösser als der Abstand der einander abgewandten Umfangsränder der Dichtflächen der Kolben 17, 18 und das Kolbenpaar bewegt sich beim Öffnen und Schliessen zwischen den beiden Ringnuten 40, 41 hin und her. Die Ringnut 40 ist durch eine erste radiale Bohrung 42 mit einer zur Zylinderachse des Hohlraums 2 parallelen Längsbohrung 43 verbunden, die durch eine zweite radiale Bohrung 44 mit der Ringnut 41 verbunden ist. Die Ringnut 41 verläuft durch den den Kanälen 3, 4 abgewandten Randabschnitt der Öffnung des Entlastungskanals 5.

Aus fertigungstechnischen Gründen (Gratbildung beim Bohren der Kanäle) weist der Zylindermantel 12 ferner noch drei weitere Ringnuten 53, 54, 55 auf. In die Ringnut 53 mündet der Einlasskanal 3 und in die Ringnut 54 der Auslasskanal 4, wobei der Kanaldurchmesser etwas kleiner als die Breite der betreffenden Ringnut 46, 47 ist. Die Ringnut 55 ist an der der Ringnut 41 gegenüberliegenden Seite der Öffnung des Entlastungskanals 5 angeordnet. Der dem Kolben 18 zugewandte Umfangsrand der Dichtfläche des Kolbens 17 grenzt in der Offenstellung (Fig. 1 und 3) an die Ringnut 53 und in der Schliessstellung (Fig. 2 und 4) an die Ringnut 54 an. In der Offenstellung sind also beide Ringnuten 53 und 54 frei, in der Schliessstellung verschliesst der Kolben 17 die Ringnut 53 und damit den Einlasskanal 3, wogegen die Ringnut 54 und damit der Auslasskanal 4 frei bleibt. Die Abmessung der Dichtfläche des Kolbens 18 in Achsenlängsrichtung entspricht dem Abstand der einander zugewandten Ränder der Ringnuten 41 und 55. In der Offenstellung (Fig. 1 und 3) liegt der Kolben 18 zwischen den Ringnuten 54 und 55, in der Schliessstellung (Fig. 2 und 4) zwischen den Ringnuten 41 und 55.

Die Absperrvorrichtung arbeitet wie folgt:

In der Offenstellung (Fig. 1 und 3) gibt der Kolben 17 den Einlasskanal 3 frei, und dieser steht durch den Hohlraum 2 in Verbindung mit dem Auslasskanal 4. Der Kolben 18 verschliesst den Abschnitt des Hohlraums 2 zwischen dem Auslass- und dem Entlastungskanal 4, 5. Wenn die Dichtfläche des Kolbens 17 nicht mehr einwandfrei dicht ist, gelangt Leckflüssigkeit in die Ringnut 40 und fliesst von dieser durch die Bohrungen 42 bis 44 in die Ringnut 41 und von dieser in den Entlastungskanal 5, der mit einem Überlauf verbunden und im Betrieb mit Flüssigkeit gefüllt ist. Die infolge einer Undichtigkeit in den Entlastungskanal 5 fliessende Flüssigkeit bewirkt also, dass Flüssigkeit aus dem Überlauf heraustropft, was die Undichtigkeit anzeigt. Wenn die Dichtfläche des Kolbens 18 undicht ist, gelangt die Leckflüssigkeit in die Ringnut 55 und damit ebenfalls in den Entlastungskanal 5.

Zum Schliessen der Absperrvorrichtung wird die Kolben-Zylindereinheit 28 pneumatisch beaufschlagt. Der Zapfen 35 des Kolbens 34 drückt auf die Schraube 24 und verschiebt das Kolbenpaar 17, 18 in der Zeichnung nach rechts. Dabei schliesst der Kolben 17 den Einlasskanal 3 und der Kolben 18 gibt den Abschnitt des Hohlraums 2 zwischen dem Auslasskanal und der in den Entlastungskanal 5 mündenden Ringnut 55 frei. Die im Auslasskanal 4 und der an ihn angeschlossenen Rohrleitung unter Druck stehende Flüssigkeit tritt aus dem mit dem Entlastungskanal 5 verbundenen Überlauf aus. Nachdem der Druck ausgeglichen ist, tritt, wenn der Kolben 17 einwandfrei dichtet, keine Flüssigkeit mehr aus. Wenn trotzdem noch Flüssigkeit aus dem Überlauf austritt, bedeutet dies eine Undichtigkeit des Kolbens 17. Dann fliesst nämlich entweder Leckflüssigkeit durch eine undichte Stelle des Kolbens 17 und den Ringraum zwischen dem Kolbenfortsatz 20 und dem Zylindermantel 12 in die Ringnut 40 und von dort in der oben beschriebenen Weise in den Entlastungskanal 5. Oder es tritt Leckflüssigkeit durch eine undichte Stelle des Kolbens 17 in den Raum um die Verbindungsstange 19, der über die Ringnut 55 mit dem Entlastungskanal 5 in Verbindung steht. Es hat sich gezeigt, dass auch geringfügige Undichtigkeiten zuverlässig erkannt werden können, selbst dann, wenn die Absperrvorrichtung in rascher Folge öffnet und schliesst und beim Schliessen infolge hoher Druckspitzen relativ viel Flüssigkeit aus dem Überlauf ausströmt. Eine einwandfreie Dichtigkeit erkennt man in diesem Fall daran, dass der Flüssigkeitsaustritt aus dem Überlauf kurzzeitig völlig aufhört. Bei ständigem, wenn auch kurzzeitig nur geringem Überlaufen liegt eine Undichtigkeit vor.

Mit der beschriebenen Absperrvorrichtung lassen sich auch unter hohem Druck von beispielsweise 100 bis 200 bar stehende Flüssigkeitsströme innert weniger Millisekunden absperren und freigeben. Versuche haben gezeigt, dass diese kurzen Schliess- und Öffnungszeiten nur eingehalten werden können, wenn der Entlastungskanal seine Funktion erfüllt, also nicht verschlossen ist.

Zur kurzen Schliess- und Öffnungszeit trägt weiter bei, dass die vom Druckmittel beaufschlagte Arbeitsfläche des Kolbens 34 der Kolben-Zylindereinheit 28 bzw. 29 um ein Mehrfaches grösser ist als die Querschnittsfläche des Verschlussorgans (Kolbenpaars 17, 18). Dadurch wird das Verhältnis der auf das Verschlussorgan wirkenden Schubkraft zur Masse und damit die Beschleunigung grösser, als wenn das Druckmittel direkt auf das Verschlussorgan wirken würde.

Die Verbindung des Auslasskanals mit dem Entlastungskanal beim Schliessen der Vorrichtung gewährleistet, dass die Flüssigkeitsströmung in der an den Auslasskanal angeschlossenen Rohrleitung unmittelbar nach dem Schliessen der Vorrichtung aufhört, und trotz der äusserst kurzen Schliesszeit keine Druckspitzen in der Auslass-Rohrleitung entstehen.

Ein Ausfliessen von Flüssigkeit aus einer an den Ausgangskanal angeschlossenen Düse nach dem Schliessen der Absperrvorrichtung wird besonders zuverlässig durch die erfindungsgemässe Verwendung der Absperrvorrichtung vermieden. Bei der zum intervallweisen Versprühen einer Flüssigkeit bestimmten Verwendung wird an den Auslasskanal der Vorrichtung eine Sprühdüse angeschlossen, die nach Art eines Überdruckventils mit einem federbelasteten Verschlussstück ausgebildet ist, das selbsttätig öffnet, wenn der Flüssigkeitsdruck den durch die Federkraft ausgeübten Druck überschreitet. Infolge des Entlastungskanals unterschreitet der Druck in der Sprühdüse unmittelbar nach dem Schliessen der Absperrvorrichtung den durch die Federkraft auf das Verschlussstück der Düse ausgeübten Druck, so dass dieses schliesst und jegliches Ausfliessen von Flüssigkeit aus der Düse vermieden wird.

Die beschriebene Absperrvorrichtung ist insbesondere für Hochtemperaturschmiermittel der in den schweiz. Patentschriften 596 294 und 609 728 beschriebenen Art geeignet. Diese Schmiermittel enthalten im wesentlichen Graphit, Polymere und Hilfsstoffe, wie Stabilisatoren, suspendiert in Wasser. Sie werden zum Schmieren der Dornstange bei der Rohrherstellung verwendet, wobei sie den Sprühdüsen unter einem Druck bis zu 250 bar (in der regel 80 bis 120 bar) und mit Strömungsgeschwindigkeiten von 20 bis 120 m/sec. zugeführt werden. Kritisch ist bei diesen Schmiermitteln die Abrasion, die — für ein Schmiermittel an sich überraschend — auftritt, wenn die Graphitplättchen auf eine Fläche aufprallen. Es hat sich gezeigt, dass die bisherigen, handelsüblichen Absperrventile nach verhältnismässig kurzer Zeit nicht mehr funktionsfähig sind, wenn sie für diese abrasiv wirkenden Schmiermittel eingesetzt werden. Die beschriebene Absperrvorrichtung gewährleistet demgegenüber zufriedenstellende Betriebssicherheit über längere Zeit.

Die beschriebene Absperrvorrichtung hat zudem den Vorteil, dass eine Undichtigkeit rechtzeitig erkannt wird und nicht zu einer plötzlichen Funktionsunfähigkeit der Vorrichtung führt. Das ist besonders wesentlich, wenn die Absperrvorrichtung Teil einer grossen Anlage, z.B. einer Rohrherstellungsanlage ist. Würde die Absperrvorrichtung plötzlich und unerwartet ausfallen, so müsste die ganze Anlage gestoppt werden, um die Absperrvorrichtung auszuwechseln. Wenn man dagegen das allmähliche Auftreten einer Undichtigkeit rechtzeitig erkennt, und die Vorrichtung trotz der bestehenden Undichtigkeit noch während längerer Zeit funktionsfähig bleibt, so kann man die Absperrvorrichtung im Rahmen der nächstfälligen Servicearbeiten an der ganzen Anlage auswechseln, ohne dass die Produktion nur wegen der Absperrvorrichtung unterbrochen werden müsste. Das wird bei der beschriebenen Absperrvorrichtung dadurch erreicht, dass Leckflüssigkeit durch den Entlastungskanal austritt, so dass einerseits die Undichtigkeit rechtzeitig erkannt werden kann und andererseits keine Gefahr besteht, dass Leckflüssigkeit in die Betätigungseinrichtung (Kolben-Zylindereinheit 28, 29) gelangt und deshalb die Absperrvorrichtung nicht mehr betätigt werden kann.

Vorteilhaft ist ferner, dass die durch ein Druckmittel, vorzugsweise pneumatisch betriebene Betätigungseinrichtung (Einheiten 28, 29) nicht fest mit dem das Verschlussorgan bildenden Kolbenpaar 17, 18 verbunden ist, sondern lediglich auf dieses drückt. Dadurch werden ausschliesslich axiale und keine radialen Kräfte auf das Kolbenpaar übertragen, was ein einwandfreies Gleiten des Kolbenpaars im Zylindermantel gewährleistet und eine Abnutzung der Dichtflächen infolge radialer Kräfte vermeidet.

Die Betätigungseinrichtung könnte auch ohne ein Druckmittel, z.B. elektromagnetisch angetrieben werden. Der Druckmittelantrieb, insbesondere der pneumatische Antrieb gewährleistet aber ein besonders rasches, zuverlässiges Funktionieren der Vorrichtung. Ferner könnte eine druckmittelbetriebene Betätigungseinrichtung mit einer doppeltwirkenden Kolben-Zylindereinheit vorgesehen sein. Dies hätte jedoch den Nachteil, dass der Kolben zum Rückzug des Verschlussorgans mit diesem verbunden werden müsste, so dass bei nicht exakt koaxialer Führung radiale Kräfte übertragen würden.

Die Ringnuten 40, 41 und die Längsbohrung 43 könnten statt mit dem Entlastungskanal auch mit einem zusätzlichen, separaten Kanal für den Austritt von Leckflüssigkeit in Verbindung stehen. In diesem Fall müsste aber sowohl das Austreten von Leckflüssigkeit aus diesem zusätzlichen Kanal als auch aus dem Entlastungskanal 5 überwacht werden, weil eine Undichtigkeit zwischen dem Kolben 17 und dem in der Zeichnung rechts an den Einlasskanal 3 angrenzenden Teil des Zylindermantels 12 zwangsläufig zu einem Austritt von Leckflüssigkeit aus dem Entlastungskanal 5 führt.

Es sind ferner auch andere Ausbildungen des Verschlussorgans möglich. Vorteilhaft ist bei der beschriebenen Ausbildung, dass die Kolben 17, 18 verhältnismässig grosse Dichtflächen haben und der Strömungswiderstand der Verbindungsstange klein ist.

**Patentansprüche**

1. Absperrvorrichtung, insbesondere für unter hohem Druck stehende Flüssigkeit, deren Gehäuse (1) einen zylindrischen Hohlraum (2) hat, in den ein Einlass- und ein Entlastungskanal (3, 5) sowie zwischen diesen ein Auslasskanal (4) mündet, und in dem ein Verschlussorgan (17, 18) verschiebbar gelagert ist, das zwei durch eine Verbindungsstange (19) fest miteinander verbundende (19), dichtend am den Hohlraum (2) begenzenden Zylindermantel (12) anliegende Kolben (17, 18) hat, wobei in der Schliessstellung der eine (17) der beiden Kolben (17, 18) den Verbindungsweg zwischen dem Einlass- und dem Auslasskanal (3, 4) verschliesst und der andere (18) den Verbindungsweg zwischen dem Auslass- und dem Entlastungskanal (4, 5) freigibt, und in der Offenstellung (Fig. 1, 3) der eine Kolben (17) den Verbindungsweg zwischen dem Einlass- und dem Auslasskanal (3, 4) freigibt und der andere (18) den Verbindungsweg zwischen dem Auslass- und dem Entlastungskanal (4, 5) verschliesst, und wobei sich der zylindrische Hohlraum (2) beiderseits über den Verschiebeweg der beiden Kolben (17, 18) hinaus in zwei äussere Teilräume erstreckt, dadurch gekennzeichnet, dass die beiden an den Verschiebeweg der beiden Kolben (17, 18) angrenzenden, äusseren Teilräume mit dem Entlastungskanal (5) in Verbindung stehen (40-44).

2. Vorrichtung nach Anspruch 1, dadurch gekennzeichnet, dass an beiden Enden des Verschlussorgans (17, 18) je ein Fortsatz (20, 21) gebildet ist, der einen Dichtungsring (22, 23) zum Abdichten der Teilräume trägt.

3. Vorrichtung nach Anspruch 2, dadurch gekennzeichnet, dass jeder der beiden Fortsätze als Kolbenfortsatz (20, 21) ausgebildet ist, dessen Durchmesser um eine Toleranz kleiner als der Durchmesser der Dichtfläche des Kolbens (17, 18) ist, so dass der Fortsatz (20, 21) mit Spiel an der Wandung des zylindrischen Hohlraums (2) bzw. Teilraums liegt, und dessen freies Ende den Dichtungsring (22, 23) trägt, so dass mit dem Entlastungskanal (5) in Verbindung stehende, an beiden Seiten dicht abgeschlossene Ringräume zwischen den Kolbenfortsätzen (20, 21) und der Wandung des zylindrischen Hohlraums (2) bzw. Teilraums gebildet sind.

4. Vorrichtung nach einem der Ansprüche 1 bis 3, dadurch gekennzeichnet, dass das Verschlussorgan (17, 18) durch eine druckmittelbetriebene Betätigungseinrichtung (28, 29) zwischen der Offen- und der Schliessstellung hin und herbewegbar ist, und dass jede der beiden vom Druckmittel jeweils zum Öffnen und Schliessen des Verschlussorgans (17, 18) beaufschlagten Arbeitsflächen der Betätigungseinrichtung grösser, vorzugsweise um ein mehrfaches grösser ist als die Querschnittsfläche des Verschlussorgans (17, 18).

5. Vorrichtung nach Anspruch 4, dadurch gekennzeichnet, dass die Betätigungseinrichtung zwei an den beiden Stirnseiten des gehäuses (1) angeordnete einfach wirkende Kolben-Zylindereinheiten (28, 29) hat, deren Kolbenhub je übertragbar ist, so dass dieses (17, 18) bei Druckbelastung der einen Einheit (28) aus der Offen- in die Schliessstellung und bei Druckbelastung der anderen Einheit (29) aus der Schliess- in die Offenstellung gestossen wird.

6. Vorrichtung nach einem der Ansprüche 1-3, dadurch gekennzeichnet, dass die die Teilräume begrenzenden Zylindermantelabschnitte je eine Ringnut (40, 41) aufweisen, und dass die eine Ringnut (41) durch die Mündungsöffnung des Entlastungskanals (5) verläuft, und die beiden Ringnuten (40, 41) durch zwei radial und eine längs im Gehäuse verlaufende Bohrungen (42/44, 43) miteinander in Verbindung stehen.

7. Vorrichtung nach Anspruch 6, dadurch gekennzeichnet, dass die beiden Ringnuten (40, 41) unmittelbar an den Verschiebeweg des Verschlussorgans (17, 18) angrenzen.

8. Verwendung der Vorrichtung nach einem der Ansprüche 1 bis 7, zum intervallweisen Versprühen einer Flüssigkeit, insbesondere eines Schmiermittels, dadurch gekennzeichnet, dass an den Auslasskanal der Vorrichtung eine Sprühdüse angeschlossen wird, die nach Art eines Überdruckventils mit einem federbelasteten Verschlussstück ausgebildet ist, das selbsttätig öffnet, wenn der Flüssigkeitsdruck den durch die Federkraft ausgeübten Druck überschreitet.

**Claims**

1. A shut off device, more especially for fluid standing under high pressure, the housing (1) of which has a cylindrical cavity (2) into which there opens an inlet duct and a relieving duct (3, 5) as well as between these an outlet duct (4), and in which there is mounted so as to be displaceable a closure member (17, 18) which has two pistons (17, 18) which are connected (19) securely together by a connecting rod (19) and which butt in sealing manner against the cylinder jacket (12) bounding the cavity (2), in which respect in the closed position the one (17) of the two pistons (17, 18) closes off the connecting path between the inlet duct and the outlet duct (3, 4) and the other (18) frees the connecting path between the outlet duct and the relief duct (4, 5), and in the open position (Figs. 1, 3) the one piston (17) frees the connecting path between the inlet duct and the outlet duct (3, 4) and the other (18) closes off the connecting path between the outlet duct and the relief duct (4, 5), and in which respect the cylindrical cavity (2) extends on both sides beyond the path of displacement of the two pistons (17, 18) into two outer partial chambers, characterised in that the two outer partial chambers which adjoin the path of displacement of the two pistons (17, 18) communicate (40, 44) with the relief duct (5).

2. A device according to claim 1, characterised in that formed at both ends of the closure member (17, 18) is a respective extension (20, 21) which carries a sealing ring (22, 23) for sealing off the partial chambers.

3. A device according to claim 2, characterised in that each of the two extensions is designed as a piston extension (20, 21), the diameter of which is smaller by a tolerance than the diameter of the sealing surface of the piston (17, 18), so that the extension (20, 21) lies with play on the wall of the cylindrical cavity (2) or partial chamber, and the free end thereof carries the sealing ring (22, 23), so that annular chambers which communicate with the relief duct (5) and which are tightly closed off at both sides are formed between the piston extensions (20, 21) and the wall of the cylindrical cavity (2) or respectively partial chamber.

4. A device according to one of claims 1 to 3, characterised in that the closure member (17, 18) is movable to and from by a pressure-medium-operated actuating mechanism (28, 29) between the open position and the closed position, and in that each of the two working surfaces of the actuating mechanism which are acted upon pressure medium respectively for the opening and closing of the closure member (17, 18) is larger, preferably by a multiple larger, than the cross-sectional surface area of the closure member (17, 18).

5. A device according to claim 4, characterised in that the actuating mechanism has two single-acting piston cylinder units (28, 29) which are arranged on the two end faces of the housing (1) and the piston stroke of each is each transmittable, so that this (17, 18) upon pressure loading of the one unit (28) is pushed out of the open position into the closed position and upon pressure loading of the other unit (29) is pushed out of the closed position into the open position.

6. A device according to one of claims 1 to 3, characterised in that the cylinder jacket portions bounding the partial chambers each have an annular groove (40, 41), and in that the one annular groove (41) extends through the mouth aperture of the relief duct (5), and the two annular grooves (40, 41) communicate with one another through two bores (42, 44) extending radially and one bore (43) extending longitudinally in the housing.

7. A device according to claim 6, characterised in that the two annular grooves (40, 41) are directly contiguous to the path of displacement of the closure member (17, 18).

8. Use of the device according to one of claims 1 to 7, for the intervalwise spraying of a liquid, more especially of a lubricant, characterised in that connected to the outlet duct of the device is a spraying nozzle which is designed in the manner of an overpressure valve with a spring-loaded closure piece which automatically opens when the liquid pressure exceeds the pressure exerted by the spring force.

## Revendications

1. Dispositif d'obturation, en particulier pour un fluide soumis à une forte pression, dont le carter (1) présente une cavité cylindrique (2) dans laquelle débouchent un canal d'admission et un canal de décharge (3, 5), ainsi qu'un canal de sortie (4) situé entre ces derniers, et dans laquelle est monté coulissant un organe obturateur (17, 18) qui comprend deux pistons (17, 18) reliés fermement (19) l'un à l'autre par l'intermédiaire d'une tige de solidarisation (19), et appliqués de manière étanche contre l'enveloppe cylindrique (12) délimitant la cavité (2), dispositif dans lequel, dans la position de fermeture, l'un (17) des deux pistons (17, 18) obture le trajet de communication entre le canal d'admission et le canal de sortie (3, 4), et l'autre (18) libère le trajet de communication entre le canal de sortie et le canal de décharge (4, 5) et, dans la position d'ouverture (figu-

res 1, 3), l'un (17) des pistons libère le trajet de communication entre le canal d'admission et le canal de sortie (3, 4), et l'autre (18) obture le trajet de communication entre le canal de sortie et le canal de décharge (4, 5), et dans lequel la cavité cylindrique (2) s'étend de part et d'autre, au-delà du trajet de coulissement des deux pistons (17, 18), en deux chambres partielles extérieures, caractérisé par le fait que les deux chambres partielles extérieures, limitrophes du trajet de coulissement des deux pistons (17, 18), sont en communication (40, 44) avec le canal de décharge (5).

2. Dispositif selon la revendication 1, caractérisé par le fait qu'un prolongement respectif (20, 21), formé aux deux extrémités de l'organe obturateur (17, 18), porte une bague d'étanchement (22, 23) pour assurer l'étanchéité des chambres partielles.

3. Dispositif selon la revendication 2, caractérisé par le fait que chacun des deux prolongements est réalisé sous la forme d'un prolongement (20, 21) de piston dont le diamètre est inférieur, d'un écart de tolérance, au diamètre de la face d'étanchéité du piston (17, 18), de façon que le prolongement (20, 21) soit appliqué, avec jeu, contre la paroi respective de la cavité cylindrique (2) ou de la chambre partielle, et dont l'extrémité libre porte la bague d'étanchement (22, 23) de manière à donner naissance, entre les prolongements (20, 21) des pistons et la paroi respective de la cavité cylindrique (2) ou de la chambre partielle, à des chambres annulaires qui communiquent avec le canal de décharge (5) et sont fermées hermétiquement de part et d'autre.

4. Dispositif selon l'une des revendications 1 à 3, caractérisé par le fait que l'organe obturateur (17, 18) peut être animé d'un va-et-vient, entre les positions d'ouverture et de fermeture, par l'intermédiaire d'un dispositif d'actionnement (28, 29) mû par un fluide sous pression; et par le fait que chacune des deux faces actives du dispositif d'actionnement, respectivement sollicitées par le fluide sous pression en vue de l'ouverture et de la fermeture de l'organe obturateur (17, 18), excède de préférence plusieurs fois la superficie de section de l'organe obturateur (17, 18).

5. Dispositif selon la revendication 4, caractérisé par le fait que le dispositif d'actionnement se compose de deux vérins (28, 29) à action simple, situés aux deux faces extrêmes du carter (1), et dont la course du piston respectif peut être répercutée de façon que ce dernier (17, 18) soit poussé de la position d'ouverture à la position de fermeture lors d'une sollicitation par pression de l'un (28) des vérins, et de la position de fermeture à la position d'ouverture lors d'une sollicitation par pression de l'autre vérin (29).

6. Dispositif selon l'une des revendications 1-3, caractérisé par le fait que les tronçons d'enveloppe cylindrique délimitant les chambres partielles présentent une gorge annulaire chacune (40, 41); et par le fait que l'une (41) des gorges annulaires s'étend à travers l'orifice d'embouchure du canal de décharge (5), et les deux gorges annulaires (40, 41) sont en communication mutuelle par l'intermédiaire de perçages (42/44, 43) dont deux s'étendent radialement, et l'un longe intérieurement le carter.

7. Dispositif selon la revendication 6, caractérisé par le fait que les deux gorges annulaires (40, 41) sont directement limitrophes du trajet de coulissement de l'organe obturateur (17, 18).

8. Application du dispositif selon l'une des revendications 1 à 7, en vue de l'atomisation intermittente d'un fluide, en particulier d'un lubrifiant, caractérisée par le fait qu'une buse d'atomisation, raccordée au canal de sortie du dispositif, est réalisée à la manière d'une valve de surpression équipée d'une pièce obturatrice qui est chargée élastiquement, et s'ouvre automatiquement lorsque la pression du fluide excède la pression exercée par la force élastique.

# Fig.1

# Fig. 2

Fig. 3

Fig. 4

# Fig.5

EP 0 192 037 B1